# EUROPEAN PATENT APPLICATION

(11) **EP 2 690 865 A1**
(43) Date of publication of application: **29.01.2014**
(21) Application number: 13176779.0
(22) Date of filing: 17.07.2013
(51) Int. Cl.: H04N 5/76, H04N 5/91, H04N 9/79, H04N 5/913

(54) **Recording Device**

(30) Priority: 27.07.2012 JP 2012167458
(71) Applicant: Funai Electric Co., Ltd., Daito-shi, Osaka 574-0013 (JP)
(72) Inventor: Tomita, Tomoaki, Daito-shi, Osaka 574-0013 (JP)
(74) Representative: Grünecker, Kinkeldey, Stockmair & Schwanhäusser

(57) **Abstract**

When a recording programming time is reached, a recording device of the present invention determines whether or not an automatic conversion setting is previously made on an item of content to be recorded. If the automatic conversion setting is made, a recording processing portion (11a) records, in a DR mode, the content programmed to be recorded. Then, the format conversion portion (11b) is instructed to perform format conversion according to the number of times and a format specified in the automatic conversion setting. The format conversion portion receiving this instruction performs the format conversion according to the number of times and the format specified in the automatic conversion setting, and records post-conversion content in a specified record destination.

## Description

### BACKGROUND OF THE INVENTION

### 1. Field of the Invention

The present invention relates to a recording device that records images or sound, and more particularly relates to a recording device that has a plurality of recording modes.

### 2. Description of Related Art

In recent years, a variety of recording devices such as HDD (hard disk drive) recorders and BD (blu-lay disc; registered trade mark) recorders have been widely used due to the multi-functionality and the diversification of digital technology. These recording devices decode image/sound digital data (hereinafter referred to as "content") contained in broadcast waves, and thereby output image/sound signals to television sets, monitors, speakers and the like.

One characteristic of this type of digital broadcast is that, as compared with analog broadcast, the degradation of image quality is significantly reduced. Hence, since, if general viewers are allowed to replicate the digital broadcast in a digital mode without limitation, it is feared that unauthorized copies are circulated and this causes losses in broadcasters, limitation on the number of times of replication is provided.

As the method of limiting the number of times of replication, "copy once" in which copying is allowed to be performed only once, and "dubbing 10" in which the number of times of dubbing is limited to 10 or less are known. In the "dubbing 10", copying is allowed to be performed nine times, and move is allowed to be performed once. In other words, in the "dubbing 10", each time copying is performed, the number of times replication can be performed is reduced, and, when the remaining number of times replication can be performed reaches one, and then copying is performed, data is erased from the original storage site (that is, the content is moved from a content recording device to a content reproduction device which is the destination of the copying).

Incidentally, in a reproduction device (for example, a tablet or a mobile telephone) having only a content reproduction function, the format in which its content can be reproduced differs depending on the type of device. Hence, when the content is copied from a recording device to a reproduction device, its format is converted into the format in which the content reproduction device that is the destination of the copying can perform reproduction, and thereafter the copying is performed.

In conjunction with what has been described above, a technology is disclosed and proposed in which, when a user copies recorded content, based on copying conditions previously specified on a setting screen, copying conditions such as an image quality mode and a quantity are determined (for example, see patent document 1).
Patent document 1: JP-A-2005-347825

However, format conversion normally requires a processing time that is approximately equal to the reproduction time of content. Moreover, when the content on which format conversion has been performed (hereinafter referred to as "post-conversion content") is copied, the post-conversion content is automatically erased from a recording device. Hence, when the post-conversion content in the same format is copied to a plurality of devices of the same type or when the post-conversion content in different formats is copied to a plurality of devices of different types, the user needs to perform a format conversion operation many times, and it is disadvantageously time-consuming and bothersome.

### SUMMARY OF THE INVENTION

The present invention is made in view of the foregoing problem; an object of the present invention is to provide a recording device that can efficiently copy content in which copy limitation is made.

To achieve the above object, according to the present invention, there is provided a recording device including: a recording portion that records reproduction data including an image or a sound; a conversion portion that performs format conversion on the reproduction data to generate conversion data; and a conversion control portion that receives a multiple conversion instruction to perform, a plurality of times, the format conversion on a plurality of recording media or a plurality of formats and that controls the conversion portion such that the conversion portion performs the format conversion corresponding to the multiple conversion instruction.

To achieve the above object, the conversion control portion records the multiple conversion instruction such that the multiple conversion instruction is associated with a recording programming setting of the reproduction data, and when recording processing based on the recording programming setting is performed, and the multiple conversion instruction is associated with the recording processing setting, the conversion control portion controls the conversion portion such that the conversion portion performs the format conversion corresponding to the multiple conversion instruction on the reproduction data recorded based on the recording processing setting.

To achieve the above object, the conversion control portion controls the conversion portion such that, only in a time period satisfying a predetermined condition or a time period specified in the format conversion instruction, the conversion portion performs the format conversion corresponding to the multiple conversion instruction.

To achieve the above object, the recording device includes a connection portion that connects, as the recording medium, a semiconductor recording medium, a magnetic recording medium, an optical recording medium or a magneto-optical recording medium, and the conversion control portion records the conversion data in the recording medium specified in the multiple conversion instruction.

To achieve the above object, the recording device includes a communication portion that communicates with a reproduction device connected to a communication network, and the conversion control portion records the conversion data in the reproduction device specified in the multiple conversion instruction.

To achieve the above object, the recording device includes a broadcast reception portion that receives broadcast waves and acquires the reproduction data from the broadcast waves, and the conversion control portion receives the multiple conversion instruction on the reproduction data acquired by the broadcast reception portion, and controls the conversion portion such that the conversion portion performs the format conversion corresponding to the multiple conversion instruction.

To achieve the above object, the conversion control portion changes the number of times the reproduction data can be replicated according to the number of times the conversion data is generated by the conversion portion.

As described above, in the present invention, it is possible to provide a recording device that can efficiently copy content in which copy limitation is made. It is also possible to provide, at a time, an instruction to perform a plurality of types of format conversion processing in which their details are different from each other, on one piece of reproduction data. Since the format conversion is automatically started after the completion of recording, it is not necessary for a user to manually perform the conversion. It is also possible to prevent the format conversion from affecting other types of processing (for example, programmed recording processing). It is also not necessary for the user to manually perform copying and move on conversion data.

### BRIEF DESCRIPTION OF THE DRAWINGS

Fig. 1 is a block diagram showing the configuration of function portions included in a recording device of the present invention;
Fig. 2 is a block diagram showing the internal configuration of the recording device of the present invention;
Fig. 3 is a flowchart showing format conversion processing in the present invention;
Fig. 4 is a screen diagram showing an example of the setting screen output by the recording device of the present invention;
Fig. 5 is a screen diagram showing an example of the setting screen output by the recording device of the present invention; and
Fig. 6 is a screen diagram showing an example of the setting screen output by the recording device of the present invention.

### DETAILED DESCRIPTION OF PREFERRED EMBODIMENTS

An embodiment of the present invention will be described below with reference to accompanying drawings. The embodiment described herein is an example; the present invention is not limited to the embodiment described herein.

### <1. Internal configuration>

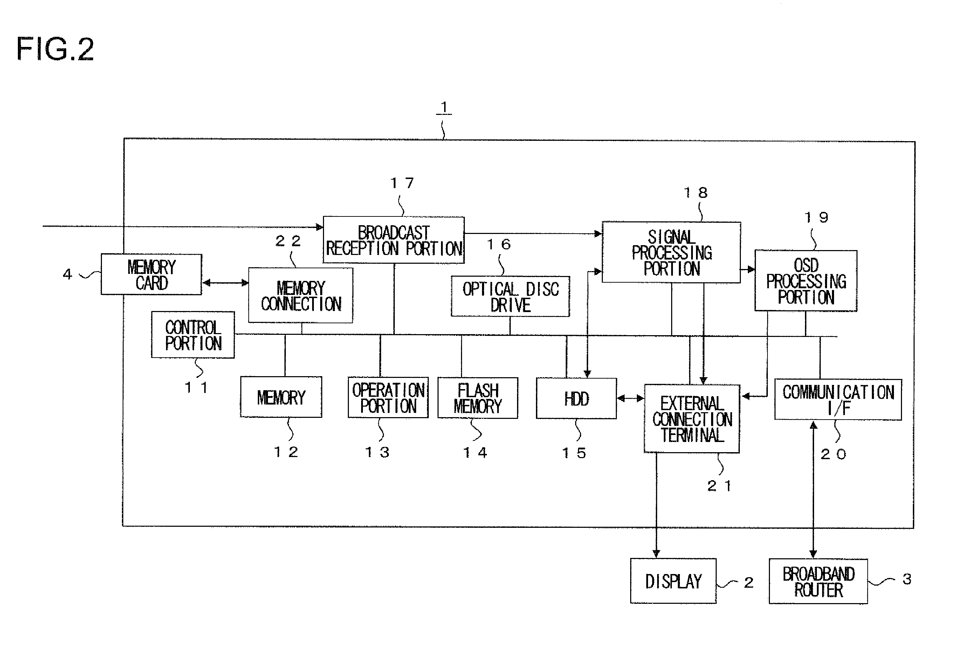

Fig. 2 is a block diagram showing the internal configuration of a BD recorder 1 (= recording device) according to the embodiment of the present invention. Arrow lines in Fig. 2 indicate the flow of image/sound data. Lines with no arrow indicate communication buses through which a control portion 11 exchanges control signals and the like with individual devices.

The BD recorder 1 includes at least the control portion 11, a memory 12, an operation portion 13, a flash memory 14, a HDD 15, an optical disc drive 16, a broadcast reception portion 17, a signal processing portion 18, an OSD (on-screen display) processing portion 19, a communication I/F (interface) 20 (= communication portion), an external connection terminal 21 and a memory connection portion 22 (= connection portion).

In Fig. 2, as a display device connected through the external connection terminal 21, a display 2 is illustrated. As a communication device connected through the communication I/F 20, a broadband router 3 is illustrated. As an external recording medium connected through the memory connection portion 22, a memory card 4 is illustrated.

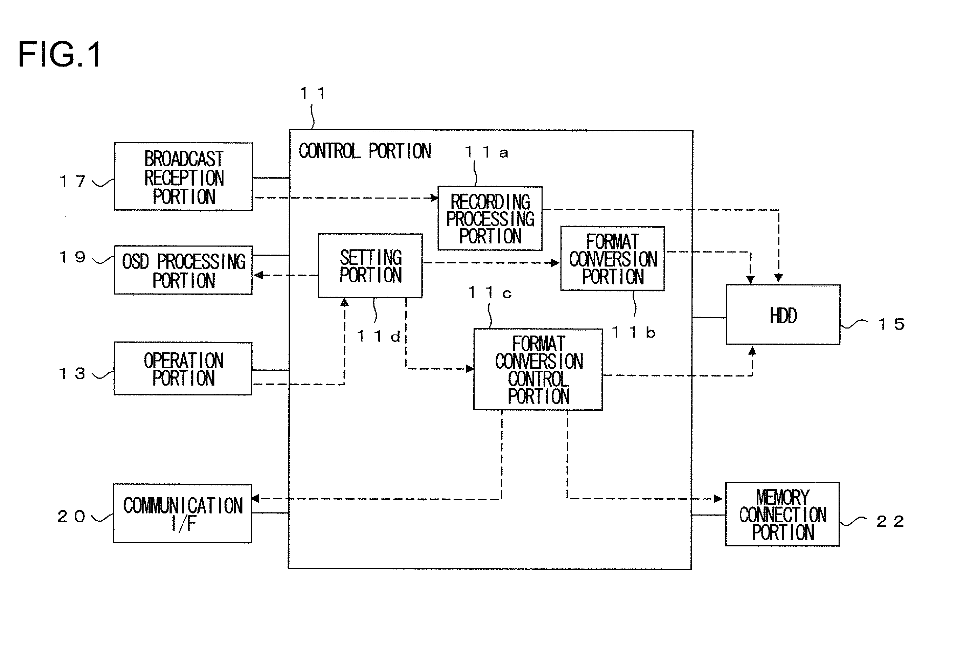

The control portion 11 controls the drive of the individual portions of the BD recorder 1, and thereby comprehensively controls reproduction processing, recording processing, output processing and the like of an image/sound. The control portion 11 is formed with, for example, a plurality of microprocessors. The control portion 11 has, as function portions realized by performing predetermined programs on an arithmetic processing unit included in the control portion 11, portions from a recording processing portion 11a to a setting portion 11d (see Fig. 1), which will be described later.

The memory 12 is a medium that temporarily records various types of data held in the BD recorder 1, and is formed with, for example, a writable RAM (random access memory). The memory 12 acts as a buffer memory in which to temporarily record, for example, processing data when the control portion 11 performs various types of information processing and an instruction/command received from a user.

The operation portion 13 is the portion through which the user instructs the BD recorder 1 to reproduce an image/sound. The operation portion 13 includes, for example, a plurality of buttons provided on the housing of the BD recorder 1 and an unillustrated remote controller. The operation portion 13 receives a user operation through these devices. When the user operation is received, the control portion 11 performs the reproduction processing, the recording processing and the like based on the details of the operation.

The flash memory 14 is a type of EEPROM, and is a ROM on which the user of the device can perform writing/erasing. Since writing and erasing can be performed with the flash memory 14 mounted on a circuit substrate, the flash memory 14 is used in an application necessary for performing rewriting during use, for example, in storing operation setting data on the device, user-specific information and the like.

The HDD 15 is a magnetic recording medium that records digital data. In the present embodiment, the HDD 15 is mainly used in recording record data (hereinafter referred to as "DR data") generated by recording, in a DR (direct recording) mode, content (= reproduction information) contained in broadcast waves and record data (hereinafter referred to as "conversion data") generated by performing format conversion on the DR data.

The optical disc drive 16 is an optical device for optically reading/writing various types of data on optical discs such as a DVD (digital versatile disc) medium and a BD medium. The optical disc drive 16 controls an optical pickup (not shown), and thereby applies an optical beam to the optical disc to read various types of information such as sound information and image information recorded in the optical disc. Here, various types of control such as optical pickup drive control, focus control and tilt control are performed.

The broadcast reception portion 17 is connected to an external antenna (not shown), and performs selection, reception, format conversion, amplification, demodulation and the like on digital/analog broadcast. The broadcast reception portion 17 includes an analog tuner if in an analog mode, an image intermediate frequency amplification circuit, a demodulation circuit and an amplification circuit. If in a digital mode, the broadcast reception portion 17 includes a digital tuner and an error correction portion.

For example, when digital broadcast is received, the digital tuner included in the broadcast reception portion 17 amplifies and detects an intermediate frequency signal. Thus, a TS (= transport stream) that is digital signals in the mode of MPEG 2 is acquired.

The TS is obtained by dividing a sound PES (packetized elementary stream), an image PES and additional information on a plurality of items of content (programs) into TS packets of a fixed length and connecting them together. The TS is fed to the signal processing portion 18, and is converted into image/sound signals. When DR recording is performed in which direct recording in the HDD 15 is performed without conversion of the TS, the signal processing portion 18 passes only the TS through.

The signal processing portion 18 is a multiple separation portion that inputs the TS generated by the broadcast reception portion 17 and digital data read by the optical disc drive 16 from the optical disc, and that separates them into a sound digital signal including sound information and an image digital signal including image information. Specifically, for example, the TS generated by the broadcast reception portion 17 is divided into the TS packets. Then, the TS packets are recombined to generate the PES of the sound/image.

Then, the PES is combined to generate an ES (elementary stream = coded sound/image data). Furthermore, the signal processing portion 18 decodes the ES to convert it into various types of digital signals. The digital signal obtained by the decoding is fed to the HDD 15 if recorded. If the digital signal is output to the display 2, it is fed to the external connection terminal 21.

The OSD processing portion 19 is a function portion that generates an image signal. The OSD processing portion 19 converts information that needs to be output by the BD recorder 1 into image data that can be visually identified by the user, and generates an image signal for displaying the converted image data on the display. The generated image signal is output through the external connection terminal 21.

The communication I/F 20 is a physical interface through which the BD recorder 1 is connected to a communication network. The communication I/F 20 includes, for example, a LAN cable connector for connection to a wired LAN in compliance with IEEE 802.3 standard or a wireless antenna for connection to a wireless LAN in compliance with IEEE 802.11 standard. An analog connection terminal for connection to a telephone network or an ISDN connection terminal for connection to an ISDN communication network may be included.

The external connection terminal 21 is an interface that is formed with a plurality of input/output terminals including, for example, a HDMI (high definition multimedia interface) terminal and a component terminal. The external connection terminal 21 uses these input/output terminals to connect the BD recorder 1 to an external device, for example, the display 2, and inputs and outputs a digital signal or an analog signal.

The memory connection portion 22 is a memory interface that is formed with input/output terminals such as a USB (universal serial bus) terminal and a flash memory connection terminal. The memory connection portion 22 uses these input/output terminals to connect together the BD recorder 1 and an external recording medium.

The display 2 is a display device that includes a display portion, an operation portion, a control portion and a connection portion, which are not shown. The display 2 receives a digital signal including the image/sound through, for example, a HDMI cable connected to the HDMI terminal included in the connection portion. Then, digital signals are combined, and the image/sound is output.

The broadband router 3 is a network relay device for mutually connecting a plurality of IP networks. Specifically, the broadband router 3 analyzes the protocol of a network layer (third layer), a transport layer (fourth layer) and the like called in an OSI (open systems interconnection) reference model is analyzed, and performs transfer. Thus, for example, the broadband router 3 acts to mutually connect two IP networks, a wired LAN and the Internet.

The memory card 4 is an external recording medium where data can be recorded/erased. As the memory card 4, for example, a semiconductor recording medium such as a USB memory, an SD card memory or a flash memory can be used.

### <2. Configuration of the function portions>

A relationship between the individual function portions for the execution of the format conversion processing in the present invention by the BD recorder 1 according to the embodiment of the present invention will now be described with reference to the block diagram of Fig. 1. Arrow broken lines in Fig. 1 indicate the flow of the control signals.

As shown in Fig. 1, acquisition reproduction processing in the present invention is performed by the recording processing portion 11a included in the control portion 11, the format conversion portion 11b (= conversion portion), the format conversion control portion 11c (= conversion control portion) and the setting portion 11d (= conversion control portion).

The recording processing portion 11a performs recording reproduction processing on the image/sound with the HDD 15. The recording processing portion 11a also performs programmed recording processing, dubbing processing and the like based on the details of settings received by the setting portion 11d, which will be described later.

For example, in a case where the programmed recording processing is performed, when a programmed recording time received by the setting portion 11d is reached, the recording processing portion 11a controls the broadcast reception portion 17 such that a broadcast program which is programmed and set is received. Then, recording content to which management information including the title and the recording date and time is added is generated from the image/sound contained in the broadcast waves, and is recorded in the HDD 15.

The format conversion portion 11b uses an unillustrated reproduction device (for example, a tablet) and thereby converts the content recorded in the HDD 15 or the like into a format (such as image quality, an image size and a file format) in which reproduction can be performed. The content (hereinafter referred to as "post-conversion content") on which the format conversion has been performed is recorded in, for example, the HDD 15.

The post-conversion content may be recorded in the memory card 4 connected to the memory connection portion 22. When the BD recorder 1 is connected to another reproduction device through a wireless LAN or the like, the post-conversion content may be recorded in a recording medium included in this reproduction device. In this way, the conversion content can be reproduced in this reproduction device.

Unless otherwise particularly specified below, the "post-conversion content" refers to "content that has been converted into a format in which reproduction can be performed in a reproduction device desired by the user." Content before the format conversion is performed is referred to as "pre-conversion content." The pre-conversion content is recorded in the HDD 15.

The format conversion control portion 11c controls the format conversion portion 11b such the setting portion 11d, which will be described later, performs the format conversion on the pre-conversion content according to a conversion format, the number of times the replication has been performed, replication execution timing and the like received from the user. The control performed by the format conversion control portion 11c will be described in detail later.

The format conversion control portion 11c sets and manages the number of times the replication can be performed on the pre-conversion content recorded in the HDD 15. The pre-conversion content recorded in the HDD 15 may include not only the content of dubbing 10 but also the content of copy once and the content in which copy limitation is not made (capable of performing replication without limitation).

Although the format conversion control portion 11c manages the number of times each item of content can be replicated, in the following description, it is assumed that, when the "pre-conversion content" is simply described, it indicates the "content of dubbing 10." Each time the content is replicated, the format conversion control portion 11c reduces the number of times the pre-conversion content can be replicated by one, and the number of times the replication can be performed after the reduction is recorded as the number of times the present content can be replicated.

For example, it is assumed that the number of times the pre-conversion content can be replicated is nine, and that the number of times the replication has been performed received by the setting portion 11d is three. In this case, the format conversion is performed three times by the format conversion portion 11b, and three items of post-conversion content are generated, and thereafter six obtained by subtracting three from nine is recorded as the number of times the pre-conversion content can be replicated.

The setting portion 11d receives various types of settings on the format conversion processing performed by the format conversion control portion 11c, on a setting screen output by the BD recorder 1.

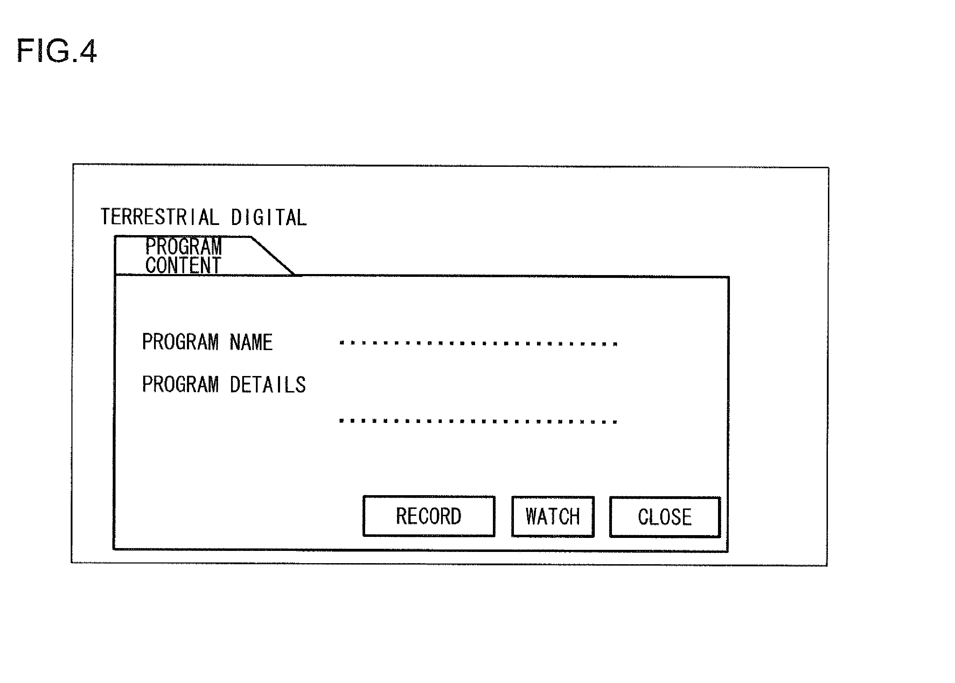

Fig. 4 is a screen diagram showing an example of the setting screen output on the display 2 by the setting portion 11d using the OSD processing portion 19. As shown in Fig. 4, on the setting screen, a program name and the details of the program are displayed, and, in a lower right area thereto, an operation menu such as "record", "watch" and "close" are displayed.

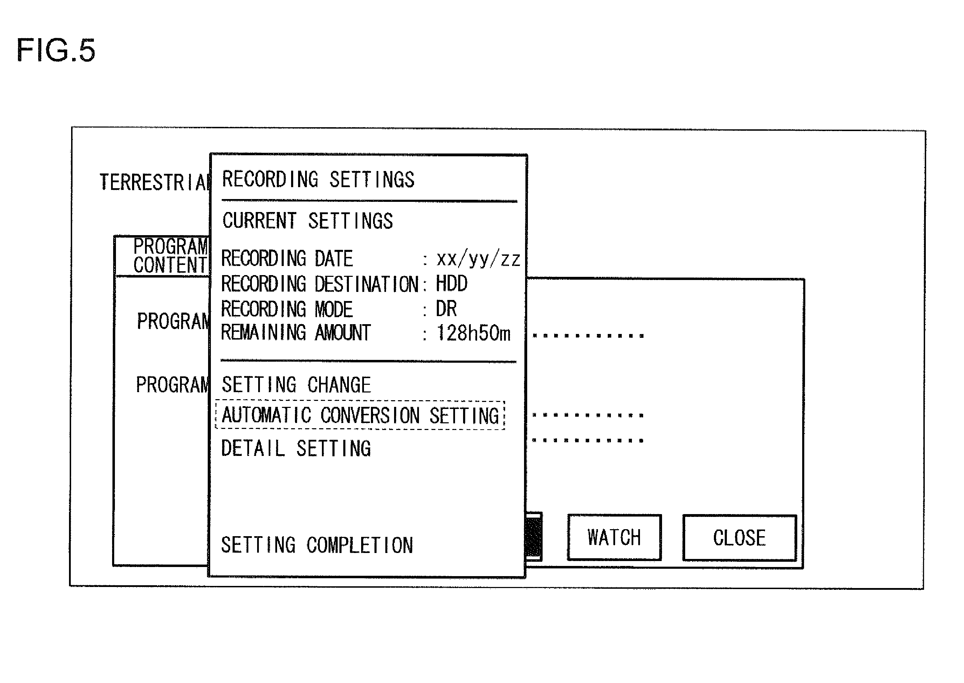

When the "record" is selected in the state of Fig. 4, the setting screen is changed to the state shown in Fig. 5. In the state of Fig. 5, a pop-up menu for performing recording setting is superimposed and displayed. In an upper portion of the pop-up menu, the current settings are displayed. Below the upper portion, as the items that the user can select, "setting change", "automatic conversion setting", "detail setting" and "setting completion" are displayed.

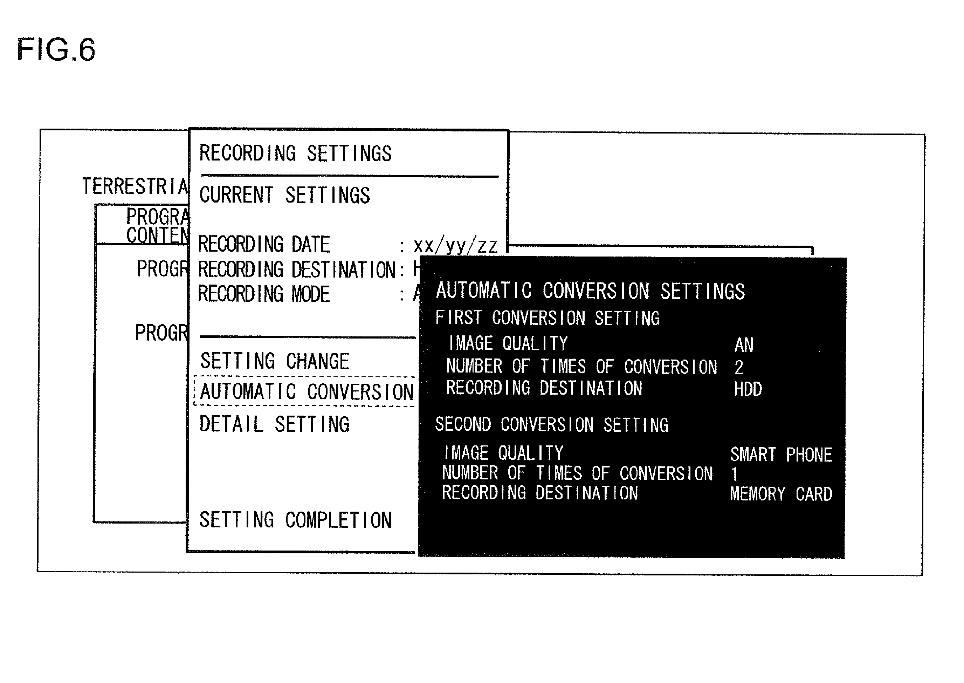

When the "automatic conversion setting" is selected in the state of Fig. 5, the setting screen is changed to the state shown in Fig. 6. In the state of Fig. 6, the pop-up menu of the automatic conversion setting for automatically performing the format conversion and the replication on the record data is superimposed and displayed. In the upper half of the pop-up menu, the "first conversion setting" is displayed; in the lower half, the "second conversion setting" is displayed.

In each of the conversion settings, as the items that the user can select, "image quality", "number of times of conversion" and "record destination" are displayed. The "image quality" is an item with which the user specifies the format when the format conversion portion 11b performs the format conversion. The "number of times of conversion" is an item with which the user specifies the number of items of post-conversion content generated. The "record destination" is an item with which the user specifies the recording medium of the post-conversion content

Although in the example shown in Fig. 6, two different types of automatic conversion, that is, the "first conversion setting" and the "second conversion setting" are made for one item of pre-conversion content, it is possible to further add a conversion setting as long as the upper limit of the number of times the replication can be performed is not exceeded. The setting items for each conversion setting are not limited to the three items described above; for example, items for specifying the propriety of conversion and a conversion execution time period may be included.

### <3. Format conversion processing>

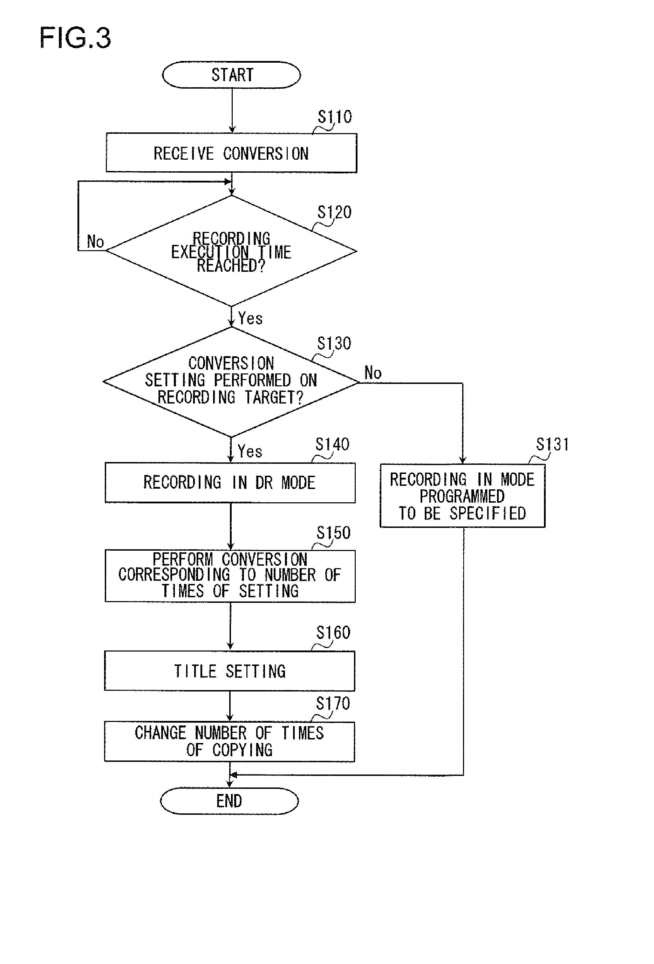

The format conversion processing performed by the BD recorder 1 according to the embodiment of the present invention will now be described with reference to the flowchart of Fig. 3. The processing shown in Fig. 3 is started when the setting screen shown in Fig. 6 is displayed by the user operation.

After the start of the present processing, in step S110, the setting portion 11d uses the pop-up menu of the "automatic conversion setting" shown in Fig. 6 to receive a conversion mode (image quality), the number of times of conversion and the like. Then, the received details are associated with recording programing setting information on the present content, and are recorded in the flash memory 14 (or the HDD 15). When the content that is programmed to be recorded is the copy once, since the format conversion is performed only once, it is not necessary to receive the number of times of conversion.

Then, in step S120, the recording processing portion 11a determines whether or not a recording execution time of recording programing which is previously registered is reached. If the recording programming time is not reached, the process moves again to step S120. If an instruction to display the setting screen shown in Fig. 6 is provided by the user operation with the above loop performed in step S120, the process moves to step S110.

If the recording programming time is reached, in step S130, the recording processing portion 11a determines whether or not the automatic conversion setting (see Fig. 6) is previously made on an item of content to be recorded. If the automatic conversion setting is not made, the process moves to step S131. In step S131, the recording processing portion 11a records the content in a recording mode specified by the recording programing. When the recording is completed, the present processing is completed.

On the other hand, if the automatic conversion setting is made, in step S140, the recording processing portion 11a records, in the DR mode, the content programmed to be recorded. Even if a recording mode other than the DR mode is specified in the recording programing, the recording is performed in the DR mode. This is because data (hereinafter referred to as "DR data") recorded in the DR mode is necessary so that the format conversion is performed in processing in a subsequent stage.

Then, in step S150, the format conversion control portion 11c instructs the format conversion portion 11b to perform the format conversion only the number of times specified by the automatic conversion setting. The format conversion portion receiving this instruction performs the format conversion only the number of times specified.

Then, in step S160, the format conversion control portion 11c individually sets the title (management information) of content on the post-conversion content on which the format conversion has been performed. The title of content normally includes not only the name of the program and the like but also the recording mode and the like. Hence, the title is changed according to the format used in the automatic conversion.

When a plurality of items of post-conversion content are generated from one item of content, it is expected that a large number of items of content having the same title or similar titles are displayed in a title list, and that this causes the user to feel bothered. Hence, the items of post-conversion content having the same title may be collectively displayed.

For example, preferably, when three items of post-conversion content having the same title (where the format is also the same) are present, only the one title is displayed in the title list, and a numerical ion with "3" displayed in part of the title is superimposed and displayed. Preferably, by making the color of the title of the post-conversion content on which the automatic conversion has been performed differ from those of the other titles, the user can intuitively distinguish the items of the post-conversion content

The post-conversion content on which the title setting has been performed is recorded in the HDD 15. When the record destination is specified by the automatic recording setting, the post-conversion content is recorded in the specified recording medium. As the record destination, for example, the memory card 4 connected to the memory connection portion 22, an unillustrated smart phone connected with a USB to the external connection terminal 21 or the like can be used.

Then, in step S170, the format conversion control portion 11c changes the number of times the pre-conversion content on which the automatic conversion has been performed can be replicated. For example, if the automatic conversion is performed three times, the number of times the replication can be performed is reduced by three. When the change is completed, the present processing is completed.

In the present embodiment described above, in the recording device having the function of performing the format conversion on the recording content, for example, when recording programming is set, the specification of the conversion format, the number of times of conversion and the like is received. Then, after the completion of the recording programming, based on the received specification, the post-conversion content of the specified format is automatically produced only the number of times specified.

Thus, as compared with a case where the user manually performs the format conversion, it is possible to reduce the time and trouble of the conversion operation and to reduce a waiting time until the completion of the conversion. When the format conversion has already been completed, the post-conversion content on which the automatic conversion has been performed is rapidly recorded in a smart phone or the like, and thus it is possible to perform reproduction while carrying it.

### [Other embodiments]

Although the present invention has been described above using the preferred embodiments and the examples, the present invention is not necessarily limited to the above embodiments; a variety of variations are possible within the scope of its technical spirit.

Hence, the present invention is applicable to the following forms.

(A) Although in the above embodiments, as the example of the recording device of the present invention, the BD recorder 1 has been described, the present invention can be applied to a recording device other than what has been described above as long as such a recording device performs format conversion on content where copy limitation is made and has the function of copying the post-conversion content to an external recording medium or the like. For example, the present invention can be applied to a HDD recorder, a DVD recorder, a STB (set top box), a television set having a recording function and the like.

(B) Although in the above embodiments, the function portions related to the format conversion processing of the present invention are realized by performing predetermined programs on an arithmetic processing unit such as a microprocessor, the function portions may be realized by a plurality of circuits.

(C) Although in the above embodiments, the memory card 4 has been described as the example of the external recording medium recording the post-conversion content, an external recording medium other than what has been described above may be connected, and the post-conversion content on which the automatic conversion has been performed may be copied or moved. For example, the post-conversion content may be copied to a magnetic recording medium such as a micro HDD, a magneto-optical recording medium such as a MO (magneto optical) or an optical disc medium such as a CD-RW. Preferably, a reproduction device that can be connected through the communication I/F 20 by wire or wirelessly, for example, a tablet, a notebook PC or a mobile telephone, is previously registered in the BD recorder 1, and the post-conversion content is copied to the registered reproduction device.

(D) Although in the above embodiments, the specification of the conversion format is manually performed by the user, the type of reproduction device externally connected to the BD recorder 1 may be previously checked, a format in which reproduction can be performed with this reproduction device may be determined, and automatic conversion and automatic copying corresponding to the determined format may be performed.

(E) Although in the above embodiments, the format conversion is started immediately after the completion of the programmed recording, the setting portion 11d may previously receive, from the user, a time period (for example, late night) during which the format conversion is allowed, and the automatic format conversion may be performed only during this time period.

(F) Although in the above embodiments, various settings on the format conversion are received at the time of reception of the programmed recording, when the details of the settings received are checked and the remaining region of the HDD 15 is likely to be lower than a predetermined capacity by the format conversion, a warning message may be output to the user.

(G) Although in the above embodiments, a method of managing the generated post-conversion content is not particularly specified, for example, in a case where a time elapsed after the generation is monitored on the post-conversion content produced in a format for the carrying of a smart phone, and it is not carried even when the elapsed time exceeds a predetermined time period (for example, one week), a notification message may be output to the user.

## Claims

1. A recording device **characterized in that**
the recording device comprises:
a recording portion that records reproduction data including an image or a sound;
a conversion portion that performs format conversion on the reproduction data to generate conversion data; and
a conversion control portion that receives a multiple conversion instruction to perform, a plurality of times, the format conversion on a plurality of recording media or a plurality of formats and that controls the conversion portion such that the conversion portion performs the format conversion corresponding to the multiple conversion instruction.

2. The recording device of claim 1, **characterized in that**
the conversion control portion records the multiple conversion instruction such that the multiple conversion instruction is associated with a recording programming setting of the reproduction data, and
when recording processing based on the recording programming setting is performed, and the multiple conversion instruction is associated with the recording processing setting, the conversion control portion controls the conversion portion such that the conversion portion performs the format conversion corresponding to the multiple conversion instruction on the reproduction data recorded based on the recording processing setting.

3. The recording device of claim 2, **characterized in that**
the conversion control portion controls the conversion portion such that, only in a time period satisfying a predetermined condition or a time period specified in the format conversion instruction, the conversion portion performs the format conversion corresponding to the multiple conversion instruction.

4. The recording device of claim 3, **characterized in that**
the recording device further comprises a connection portion that connects, as the recording medium, a semiconductor recording medium, a magnetic recording medium, an optical recording medium or a magneto-optical recording medium, and
the conversion control portion records the conversion data in the recording medium specified in the multiple conversion instruction.

5. The recording device of claim 4, **characterized in that**
the recording device further comprises a communication portion that communicates with a reproduction device connected to a communication network, and
the conversion control portion records the conversion data in the reproduction device specified in the multiple conversion instruction.

6. The recording device of claim 5, **characterized in that**
the recording device further comprises a broadcast reception portion that receives broadcast waves and acquires the reproduction data from the broadcast waves, and
the conversion control portion receives the multiple conversion instruction on the reproduction data acquired by the broadcast reception portion, and controls the conversion portion such that the conversion portion performs the format conversion corresponding to the multiple conversion instruction.

7. The recording device of claim 6, **characterized in that**
the conversion control portion changes a number of times the reproduction data can be replicated according to a number of times the conversion data is generated by the conversion portion.
